# EUROPÄISCHE PATENTSCHRIFT

(11) **EP 2 286 958 B1**
(45) Veröffentlichungstag und Bekanntmachung des Hinweises auf die Patenterteilung: **28.03.2012**
(21) Anmeldenummer: 10008157.9
(22) Anmeldetag: 05.08.2010
(51) Int. Cl.: B23Q 7/04, B23Q 39/02

(54) **Einrichtung zur Bearbeitung von Werkstücken, vorzugsweise von Wellen und Achsen**
Device for processing workpieces, preferably for shafts and axles
Dispositif destiné au traitement de pièces usinées, de préférence d'arbres et d'axes

(30) Priorität: 18.08.2009 DE 102009038957
(43) Veröffentlichungstag der Anmeldung: 23.02.2011
(73) Patentinhaber: Lang, Thomas, 71277 Rutesheim (DE)
(72) Erfinder: Lang, Thomas, 71277 Rutesheim (DE)
(74) Vertreter: Kohl, Karl-Heinz

(56) Entgegenhaltungen:
- DE-U1- 20 320 504
- FR-A1- 2 526 343
- US-A- 4 404 878
- US-A- 4 597 155

## Beschreibung

Die Erfindung betrifft eine Einrichtung zum Bearbeiten von Werkstücken, vorzugsweise von Wellen und Achsen, nach dem Oberbegriff des Anspruches 1. Solche Einrichtungen sind z.B. aus den Dokumenten DE 203 205 04 U und US-A-4,597,155 bekannt.

Es ist bekannt, stangenförmige Werkstücke in einer Endenbearbeitungseinheit zu bearbeiten, anschließend in eine zweite Bearbeitungseinheit zu transportieren und dort beispielsweise Durchmesserbearbeitungen vorzunehmen. Mit Transporteinrichtungen, z.B. Portalen, werden Werkstücke nach der Endenbearbeitung der zweiten Bearbeitungseinheit, die in der Regel eine Drehmaschine ist, übergeben. Solche Einrichtungen sind aufwändig, benötigen erheblichen Aufstellraum und zusätzliche Antriebe.

Der Erfindung liegt die Aufgabe zugrunde, die gattungsgemäße Einrichtung so auszubilden, dass mit ihr die Werkstücke bei einfacher konstruktiver Gestaltung der Einrichtung innerhalb kurzer Zeit bearbeitet werden können.

Diese Aufgabe wird bei der gattungsgemäßen Einrichtung erfindungsgemäß mit den kennzeichnenden Merkmalen des Anspruches 1 gelöst.

Bei der erfindungsgemäßen Einrichtung sind die beiden Bearbeitungseinheiten zu einer Maschine bzw. Fertigungszelle zusammengefasst. Dadurch benötigt die Einrichtung nur eine geringe Aufstellfläche. Die Transportwege für das Werkstück sind gering, so dass mit der erfindungsgemäßen Einrichtung eine hohe Maschinenleistung infolge simultan ablaufender Fertigungsprozesse erreicht werden kann. Die Übergabe des Werkstückes nach der Endenbearbeitung an die zweite Bearbeitungseinheit erfolgt mit dem Revolver, der Teil dieser zweiten Bearbeitungseinheit ist und mindestens ein Greifelement aufweist. Mit ihm kann das Werkstück nach der Endenbearbeitung erfasst und zur weiteren Bearbeitung der Bearbeitungsstation übergeben werden, die ebenfalls vorteilhaft Bestandteil der Maschine bzw. Fertigungszelle ist. Mit den Werkzeugen des Revolvers der zweiten Bearbeitungseinheit kann das Werkstück bearbeitet werden. Da dieser Revolver das Greifelement aufweist, übt er eine Doppelfunktion innerhalb der erfindungsgemäßen Einrichtung aus. Die konstruktive Gestaltung der erfindungsgemäßen Einrichtung kann dadurch sehr einfach gehalten werden. Die Nebenzeiten werden beim Einsatz der erfindungsgemäßen Einrichtung kurz gehalten.

Vorteilhaft ist die erste Bearbeitungseinheit eine zwei- oder dreiachsige Einheit.

Die zweite Bearbeitungseinheit ist vorteilhaft eine zweiachsige Einheit.

Bei der Ausführungsform ist die erste Bearbeitungseinheit mit einem Revolver versehen, so dass durch Drehen des Revolvers die unterschiedlichen Werkzeuge innerhalb kurzer Zeit zum Einsatz gebracht werden können.

Der Revolver ist vorteilhaft um eine horizontale Achse drehbar.

Damit der Revolver in Bezug auf das zu bearbeitende Werkstück genau eingestellt werden kann, ist er an einem Schlitten gelagert, der in y1-Richtung längs eines Ständers verfahren werden kann.

Wenn darüber hinaus der Ständer selbst in z1- oder z1- und x1-Richtung verfahrbar ausgebildet ist, lässt sich der Revolver bzw. das entsprechende Werkzeug einfach und innerhalb kurzer Zeit in die Bearbeitungsposition verstellen.

Am Schlitten der ersten Bearbeitungseinheit ist wenigstens ein Greifelement vorgesehen, mit dem das zu bearbeitende Werkstück erfasst werden kann. Mit Hilfe dieses Greifelementes ist es möglich, das unbearbeitete Werkstück beispielsweise von einer Transporteinrichtung aufzunehmen. Da das Greifelement am Schlitten vorgesehen ist, der längs des Ständers verfahrbar ist, kann das Greifelement ebenfalls einfach in die gewünschte Greifposition gefahren werden.

Damit die Endenbearbeitung des Werkstückes innerhalb kurzer Zeit vorgenommen werden kann, ist es vorteilhaft, im Bereich zwischen den beiden Bearbeitungseinheiten eine Spanneinrichtung vorzusehen. Mit ihr wird das Werkstück für die Endenbearbeitung eingespannt.

Bei einer bevorzugten Ausführungsform ist die Spanneinrichtung mit einem Drehtisch versehen, der um eine vertikale Achse drehbar ist. Dadurch lässt sich das Werkstück, wenn sein eines Ende bearbeitet ist, so drehen, dass auch das andere Werkstückende bearbeitet werden kann. Das Werkstück ist in der Spanneinrichtung horizontal eingespannt, so dass die bei der Bearbeitung anfallenden Späne einwandfrei nach unten fallen können und demzufolge den Zerspanungsprozess nicht stören.

Der Revolver der zweiten Bearbeitungseinheit ist um eine 45°-Achse drehbar. Dadurch ist es möglich, dass mit diesem Revolver und seinem Greifelement das horizontal liegende Werkstück aufgenommen und in eine vertikale Lage überführt werden kann.

Der Revolver der zweiten Bearbeitungseinheit ist ebenfalls vorteilhaft an einem Schlitten gelagert, der in y2-Richtung längs eines Ständers verfahren werden kann. Bevorzugt ist der Ständer selbst in z2-Richtung verfahrbar. Dadurch kann das Greifelement des Revolvers der zweiten Bearbeitungseinheit in die gewünschte Greifposition bewegt werden.

Der Ständer der zweiten Bearbeitungseinheit ist bei einer bevorzugten Ausführungsform bis in den Bereich der Spanneinrichtung verfahrbar. Dadurch besteht die Möglichkeit, dass die Werkzeuge des Revolvers der zweiten Bearbeitungseinheit an dem in der Spanneinrichtung eingespannten Werkstück Bearbeitungen vornehmen können. Es besteht hierbei in vorteilhafter Weise sogar die Möglichkeit, dass die beiden Revolver der ersten und der zweiten Bearbeitungseinheit gleichzeitig an beiden Enden des Werkstückes arbeiten. Dann ist ein Drehvorgang des Werkstückes zur Bearbeitung seiner beiden Enden nicht notwendig, wodurch sich die Taktzeit der Endenbearbeitung erheblich verringert. Die Bearbeitungsstation kann dabei trotz alle dem bei Verwendung der dritten Bearbeitungseinheit autark betrieben werden.

Das Werkstück wird vorteilhaft bei der Übergabe von der zweiten Bearbeitungseinheit an die Bearbeitungsstation aus der horizontalen in die vertikale Lage geschwenkt. Aufgrund dieser vertikalen Lage des Werkstückes hat die Bearbeitungsstation in z-Richtung nur geringe Abmessungen, was zur Kompaktheit der erfindungsgemäßen Einrichtung beiträgt.

In der Bearbeitungsstation wird das Werkstück vorteilhaft um seine Achse drehbar angetrieben, um beispielsweise Drehbearbeitungen vorzunehmen.

Bei einer bevorzugten Ausführungsform wird das Werkstück nach der Bearbeitung in der Bearbeitungsstation mit dem Greifelement des Revolvers der zweiten Bearbeitungseinheit erfasst und zur Ablage in eine horizontale Lage geschwenkt, indem der Revolver der zweiten Bearbeitungseinheit um die 45°-Achse in der entsprechenden Richtung gedreht wird. Das in die horizontale Lage geschwenkte Werkstück kann dann mittels des Revolvers beispielsweise auf einer Transporteinrichtung abgelegt werden, mit der das Werkstück aus der Einrichtung herausgeführt wird.

Der Funktionsumfang der erfindungsgemäßen Einrichtung kann dadurch erweitert werden, dass der Bearbeitungsstation wenigstens eine dritte Bearbeitungseinheit nachgeschaltet ist.

Vorteilhaft ist diese dritte Bearbeitungseinheit mit einem Revolver versehen, der Werkzeuge und wenigstens ein Greifelement aufweist. Mit den Werkzeugen dieses Revolvers kann das in der Bearbeitungsstation befindliche Werkstück bearbeitet werden. Da an dem Werkstück auch die Werkzeuge des Revolvers der zweiten Bearbeitungseinheit arbeiten können, ergeben sich sehr geringe Hauptzeiten.

Der Revolver der dritten Bearbeitungseinheit ist vorteilhaft an einem Schlitten gelagert, der längs eines Ständers in y3-Richtung verfahren werden kann.

Vorteilhaft ist der Ständer selbst in z3-Richtung verfahrbar. Auf diese Weise lassen sich das Greifelement bzw. die Werkzeuge des Revolvers der dritten Bearbeitungseinheit innerhalb kurzer Zeit in die jeweilige Position bewegen.

Mit dem Greifelement des Revolvers der dritten Bearbeitungseinheit ist es vorteilhaft möglich, das Werkstück zu greifen und aus der Bearbeitungsstation herauszutransportieren. Zeitgleich kann die zweite Bearbeitungseinheit das nächste zu bearbeitende Werkstück von der Spanneinrichtung abholen und in die Bearbeitungsstation transportieren.

Wenn der Revolver der dritten Bearbeitungseinheit um eine 45°-Achse drehbar ist, dann wird das Werkstück aus der vertikalen Lage, die es in der Bearbeitungsstation einnimmt, in eine horizontale Transportlage überführt.

Bei einer anderen Ausführungsform ist der Revolver um eine vertikale Achse drehbar. Dann verbleibt das Werkstück beim Herausführen aus der Bearbeitungsstation in der vertikalen Lage.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in Vorderansicht und in schematischer Darstellung eine erste Aus- führungsform einer erfindungsgemäßen Einrichtung,
- Fig. 2: eine Draufsicht auf die Einrichtung gemäß Fig. 1,
- Fig. 3 und Fig. 4: in Darstellungen entsprechend den Fig. 1 und 2 eine zweite Aus- führungsform einer erfindungsgemäßen Einrichtung,
- Fig. 5 und Fig. 6: in Darstellungen entsprechend den Fig. 1 und 2 eine dritte Ausfüh- rungsform einer erfindungsgemäßen Einrichtung.

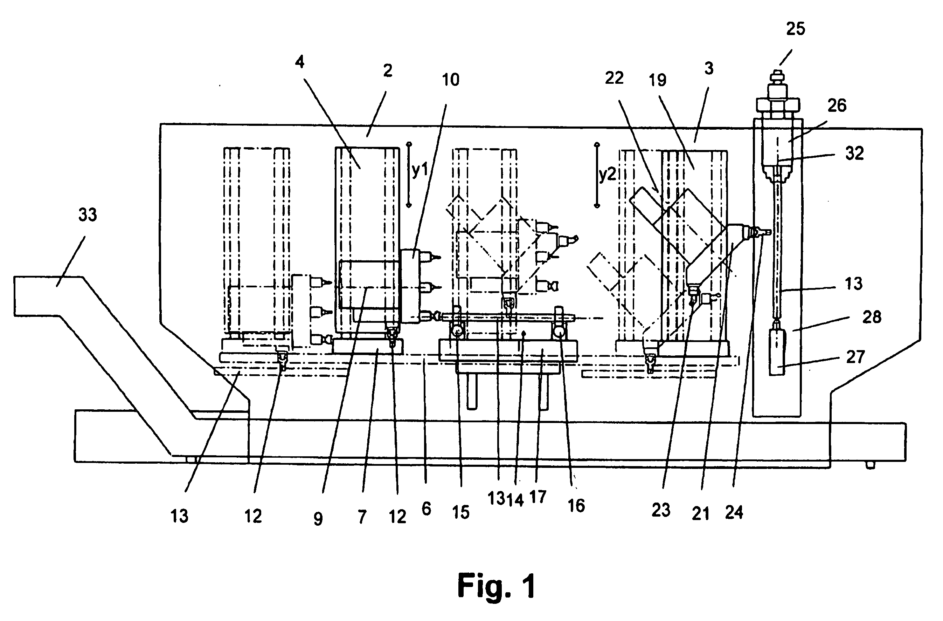

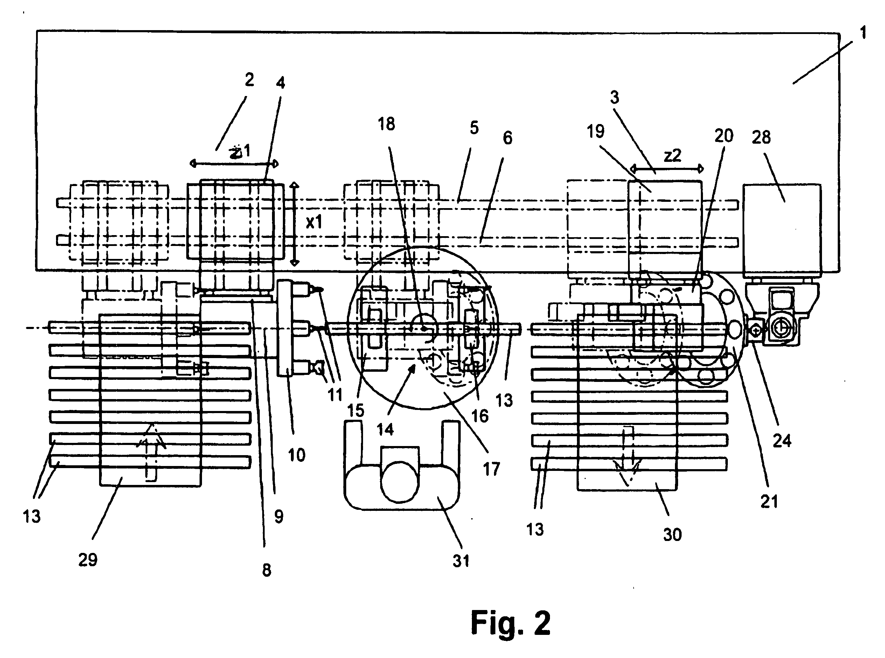

Die Einrichtung gemäß den Fig. 1 und 2 ist eine flexible Zweistationenfertigungszelle. Sie hat ein Maschinenbett 1, auf dem sich zwei Einheiten 2 und 3 für die Werkstückbearbeitung befinden. Die Einheit 2 ist beispielhaft eine Dreiachseinheit, während die Einheit 3 beispielhaft eine Zweiachseinheit ist.

Die Einheit 2 hat einen Ständer 4, der in z1- und senkrecht hierzu in x1-Richtung auf dem Maschinenbett 1 verfahrbar ist (Fig. 2). Auf dem Maschinenbett 1 befinden sich Schienen 5, 6 (Fig. 2), die sich in Längsrichtung des Maschinenbettes 1 erstrecken und auf denen der Ständer 4 in z1-Richtung mit Hilfe eines Schlittens 7 (Fig. 1) verfahrbar ist. Auf dem Schlitten 7 lässt sich der Ständer 4 in der x1-Richtung verfahren. Längs des Ständers 4 ist in y1-Richtung ein Schlitten 8 verfahrbar, der einen um eine parallel zur z1-Richtung liegende Achse 9 drehbaren Revolver 10 trägt. Er ist mit Werkzeugen 11 für die Endenbearbeitung und wenigstens einem Greifer 12 für zu bearbeitende stangenförmige Werkstücke 13 versehen.

Die Einheit 2 ist eine Endenbearbeitungseinheit, mit der eine Endenbearbeitung der Werkstücke 13 vorgenommen wird. Während der Bearbeitung ist das Werkstück 13 in einer Spanneinrichtung 14 aufgenommen. Sie ist in bekannter Weise ausgebildet und kann beispielhaft zwei Spanneinheiten 15, 16 aufweisen, mit denen das Werkstück 13 gespannt wird. Die Spanneinheiten 15, 16 befinden sich auf einem Drehtisch 17, der um eine vertikale Achse 18 (B1-Achse) gedreht werden kann (Fig. 2). Dadurch ist es möglich, das Werkstück 13 beispielsweise um 180° zu drehen, um es mit der Einheit 2 an beiden Enden bearbeiten zu können.

Die Einheit 3 hat einen vertikalen Ständer 19, der in z2-Richtung (Fig. 2) längs des Maschinenbettes 1 verfahrbar ist. Vorteilhaft ist der Ständer 19 auf den gleichen Schienen 5, 6 verfahrbar wie der Schlitten 7 der Einheit 2. Es ist aber auch möglich, für den Ständer 19 gesonderte Führungsschienen auf dem Maschinenbett 1 vorzusehen.

In Höhenrichtung des Ständers 19 ist in y2-Richtung ein Schlitten 20 verfahrbar, der einen Drehrevolver 21 trägt. Die Drehachse 22 des Drehrevolvers 21 liegt unter 45° zur y2-Richtung. Die Werkzeuge 23 sind derart am Umfang des Drehrevolvers 21 angeordnet, dass sie in der einen Stellung beispielsweise senkrecht nach unten und nach einer 180°-Drehung des Drehrevolvers 21 um die Achse 22 in einer horizontalen Stellung liegen. Der Drehrevolver 21 ist außerdem mit wenigstens einem Greifer 24 versehen, mit dem das Werkstück 13 von der Spanneinrichtung 14 zu einer Bearbeitungsstation 25 transportiert werden kann. In ihr wird das Werkstück 13 in einer vertikalen Lage eingespannt. Hierzu ist die Bearbeitungsstation 25 mit einer Spanneinheit 26 am oberen Ende und einem Reitstock 27 am unteren Ende versehen. Die Spanneinheit 26 und der Reitstock 27 sind an einem Ständer 28 vorgesehen, längs dem sie in y-Richtung verfahrbar sind.

Die zu bearbeitenden Werkstücke 13 werden horizontal liegend über eine Transporteinrichtung 29, beispielsweise ein Transportband, parallel zur x1-Richtung der Maschine herangeführt (Fig. 2). Die Einheit 2 wird in z1-Richtung so verfahren, dass der an ihr vorgesehene Greifer 12 das nächste zugeführte Werkstück 13 erfassen kann. Diese Aufnahmelage ist in den Fig. 1 und 2 durch strichpunktierte Linien dargestellt. Fig. 1 zeigt, dass der Greifer 12 der Einheit 2 in dieser Lage das Werkstück 13 etwa in halber Länge erfasst hat. Da der Ständer 4 in x1- und z1-Richtung längs des Maschinenbettes 1 und der Schlitten 8 in y1-Richtung verfahren werden kann, können die Werkstücke 13 problemlos von der Transporteinrichtung 29 abgenommen werden.

Wie Fig. 1 zeigt, befindet sich der Greifer 12 unmittelbar am Schlitten 8. Dadurch kann der Revolverkopf 10 während des Transports des Werkstückes 13 von der Transporteinrichtung 29 zur Spanneinrichtung 14 so gedreht werden, dass nach dem Einspannen des Werkstückes 13 in der Spanneinrichtung 14 sofort mit der Endenbearbeitung mit dem entsprechenden Werkzeug begonnen werden kann.

Zur Ablage des Werkstückes 13 in der Spanneinrichtung 14 wird die Einheit 2 entsprechend weit in z-Richtung verfahren. Die Übergabestellung ist in Fig. 1 ebenfalls durch strichpunktierte Linien angegeben. Sobald das Werkstück 13 in der Spanneinrichtung 14 eingespannt ist, kann die Einheit 2 zurück in die Bearbeitungsposition (ausgezogene Linien) gefahren werden. Das eingespannte Werkstück 13 steht während der Bearbeitung still.

Ist das eine Werkstückende bearbeitet, wird die Einheit 2 geringfügig zurückgefahren und anschließend die Spanneinrichtung 14 durch Drehen um die Achse 18 (B1-Achse) um 180° gedreht. Mit den Werkzeugen 11 des Revolverkopfes 10 wird dann das andere Ende des Werkstückes 13 in der gewünschten Weise bearbeitet.

Vorteilhaft wird bereits während der Bearbeitung dieses anderen Werkstückendes die Einheit 3 in z-Richtung in die Übernahmestellung verfahren, die in den Fig. 1 und 2 ebenfalls durch strichpunktierte Linien angegeben ist. Durch diese Verfahrensweise kann das Werkstück 13 unmittelbar nach der Bearbeitung von der Einheit 3 aufgenommen und der Bearbeitungsstation 25 zugeführt werden. Es ist selbstverständlich möglich, die Einheit 3 erst dann in die Übernahmeposition zu verfahren, wenn mit der Einheit 2 beide Enden des Werkstückes 13 bearbeitet worden sind.

Der Drehrevolver 21 der Einheit 3 wird um die Achse 22 so geschwenkt, dass sein Greifer 24 nach unten ragt, so dass er in der Übernahmeposition das Werkstück 13 im Bereich zwischen den beiden Spanneinheiten 15, 16 aufnehmen kann. Da der Drehrevolver 21 mit Hilfe des Schlittens 20 in y2-Richtung längs des Ständers 19 verfahren werden kann, ist die Übernahme des Werkstückes 13 in der Spanneinrichtung 14 und die Übergabe an die Bearbeitungsstation 25 problemlos möglich.

Damit das an den Enden bearbeitete Werkstück 13 an die Bearbeitungsstation 25 übergeben werden kann, sind die Spanneinheit 26 und/oder der Reitstock 27 so weit auseinandergefahren, dass das Werkstück 13 in vertikaler Lage eingebracht und in der Bearbeitungsstation 25 gespannt werden kann. Je nach Bearbeitungsaufgabe kann anstelle des Reitstocks 27 ebenfalls eine Spanneinheit vorgesehen sein. Die Spanneinheit 26 ist in bekannter Weise ausgebildet und erlaubt eine zuverlässige Einspannung des Werkstückes 13.

Der Drehrevolver 21 wird während des Transports des Werkstückes 13 von der Spanneinrichtung 14 zur Bearbeitungsstation 25 um 180° gedreht, so dass das Werkstück 13 aus der horizontalen Lage in die vertikale Lage gelangt. Sobald das Werkstück 13 in der Bearbeitungsstation 25 eingespannt ist, kann es mit Werkzeugen des Drehrevolvers 21 am Durchmesser bearbeitet werden.

Ist das Werkstück 13 in der Bearbeitungsstation 25 fertig bearbeitet, dann wird der Drehrevolver 21 so um die Achse 22 gedreht, dass der Greifer 24 das noch eingespannte Werkzeug 13 fassen kann. Anschließend wird das Werkstück 13 durch Zurückfahren der Spanneinheit 26 und/oder des Reitstockes 27 freigegeben. Die Einheit 3 wird in z-Richtung zurückgefahren und anschließend oder auch gleichzeitig der Revolverkopf 21 um die Achse 22 so gedreht, dass das Werkstück 13 in eine horizontale Lage gelangt. Der Schlitten 20 kann dann in y2-Richtung längs des Ständers 19 so weit nach unten gefahren werden, dass das Werkstück 13 auf einer Transporteinrichtung 30, beispielsweise einem Transportband, abgelegt werden kann. Mit dieser Transporteinrichtung 30 wird das bearbeitete Werkstück 13 aus der Maschine heraustransportiert.

Damit das Werkstück 13 in der Bearbeitungsstation 25 an seinem Durchmesser bearbeitet werden kann, hat die Spanneinheit 26 eine Drehachse 32 (B2-Achse), so dass das Werkstück 13 während der Bearbeitung um seine Achse drehbar angetrieben werden kann. Die Spanneinheit 26 ist dementsprechend mit einer Drehspindel versehen, mit der der Drehantrieb vorgenommen wird.

Die beiden Einheiten 2, 3 befinden sich beiderseits der Spanneinrichtung 14. In der Spanneinrichtung 14 liegt das eingespannte Werkstück 13 horizontal. Dadurch ist eine optimale Spanabfuhr gewährleistet, was insbesondere bei Trockenbearbeitung und/oder bei Minimalmengenschmierung von Vorteil ist. Fig. 1 zeigt schematisch einen Späneförderer 33, der in bekannter Weise ausgebildet ist und die bei der Bearbeitung der Werkstücke 13 anfallenden Späne aus dem Maschinenbereich abtransportiert. In der Spanneinrichtung 14 können am stehenden Werkstück 13 eine Endenbearbeitung, eine Stirnbearbeitung, aber auch Fräs- und/oder Bohrbearbeitungen vorgenommen werden. Der Einsatz des Revolvers 10 in der Einheit 2 hat den Vorteil, dass unterschiedlichste Werkzeuge 11 vorgesehen werden können, um unterschiedlichste Bearbeitungsaufgaben am Werkstück 13 durchzuführen.

Anstelle des um die horizontale Achse drehbaren Revolvers 10 kann auch eine einspindelige Maschine vorgesehen sein, in die die gewünschten Werkzeuge mit Hilfe eines Wechslermagazins eingewechselt werden. Auch bei einer solchen Einspindelausbildung ist am Schlitten 8 das Greifelement 12 vorgesehen, um das Werkstück 13 von der Transporteinrichtung 29 aufzunehmen und in die Spanneinrichtung 14 zu transportieren.

Der Drehrevolver 21 der Einheit 3 ist als Kronenrevolver ausgebildet, dessen angetriebene/starre Werkzeuge 24 in einer Kegelmantelfläche liegen, die einen Kegelwinkel von 90° hat. Mit dem Drehrevolver 21 wird nicht nur das Werkstück 13 in der beschriebenen Weise transportiert, sondern mit seinen Werkzeugen 23 erfolgt auch die Bearbeitung des Werkstückes 13 in der Bearbeitungsstation 25.

Da die Einheit 3 in z-Richtung bis in den Bereich der Spanneinrichtung 14 fahren kann, ist es möglich, mit entsprechenden Werkzeugen des Drehrevolvers 21 das Werkstück 13 auch in der Spanneinrichtung 14 zu bearbeiten. So können beispielsweise am Werkstück 13 in der Spanneinrichtung 14 Bohrungen angebracht werden. Mit den Werkzeugen 23 des Drehrevolvers 21 lassen sich auch andere Arbeiten am Werkstück 13 in der Spanneinrichtung 14 vornehmen.

Wie sich aus Fig. 2 ergibt, befindet sich die Spanneinrichtung 14 im Bereich neben dem Maschinenbett 1, so dass die bei der Bearbeitung anfallenden Späne nicht auf das Maschinenbett gelangen, sondern nach unten in den Späneförderer 33 fallen. Während der Bearbeitung befindet sich auch der Revolver 10 im Bereich neben dem Maschinenbett 1.

Beide Einheiten 2, 3 arbeiten unabhängig voneinander. So ist es möglich, dass mit den Werkzeugen 11 des Revolvers 10 das eine Ende des Werkstückes 13 und gleichzeitig mit den Werkzeugen 23 des Drehrevolvers 21 eine Bearbeitung am Werkstück 13 im Bereich zwischen den Spanneinheiten 15, 16 durchgeführt wird. Außerdem ist es möglich, mit der Einheit 2 das nächste Werkstück 13 von der Transporteinrichtung 29 abzunehmen und an die Spanneinrichtung 14 zu übergeben, während mit der Einheit 3 das an den Enden bearbeitete Werkstück 13 in die Bearbeitungsstation 25 verbracht wird. Während die Werkzeuge 23 des Drehrevolvers 21 am Werkstück 13 in der Bearbeitungsstation 25 arbeiten, erfolgt mit der Einheit 2 bereits die Endenbearbeitung des nachfolgenden Werkstückes 13 in der Spanneinrichtung 14. Die Maschine hat somit eine hohe Leistung bei kurzen Nebenzeiten. Zudem zeichnet sich die Maschine durch einen einfachen Aufbau aus. Hierzu trägt insbesondere bei, dass mit dem Drehrevolver 21 nicht nur das Werkstück 13 von der Spanneinrichtung 14 zur Bearbeitungsstation 25 transportiert wird, sondern dass mit den Werkzeugen 23 des Drehrevolvers 21 auch eine Bearbeitung am Werkstück 13 durchgeführt werden kann.

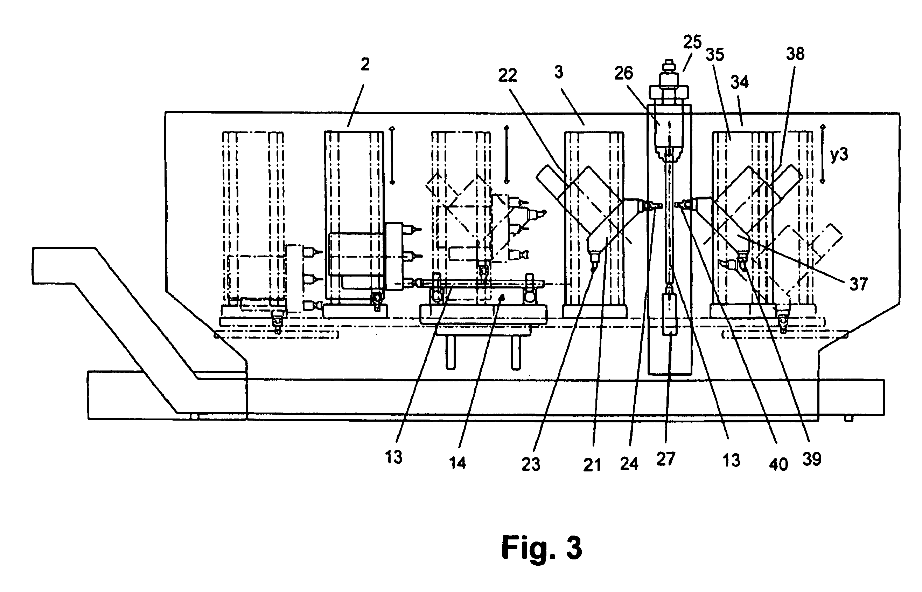

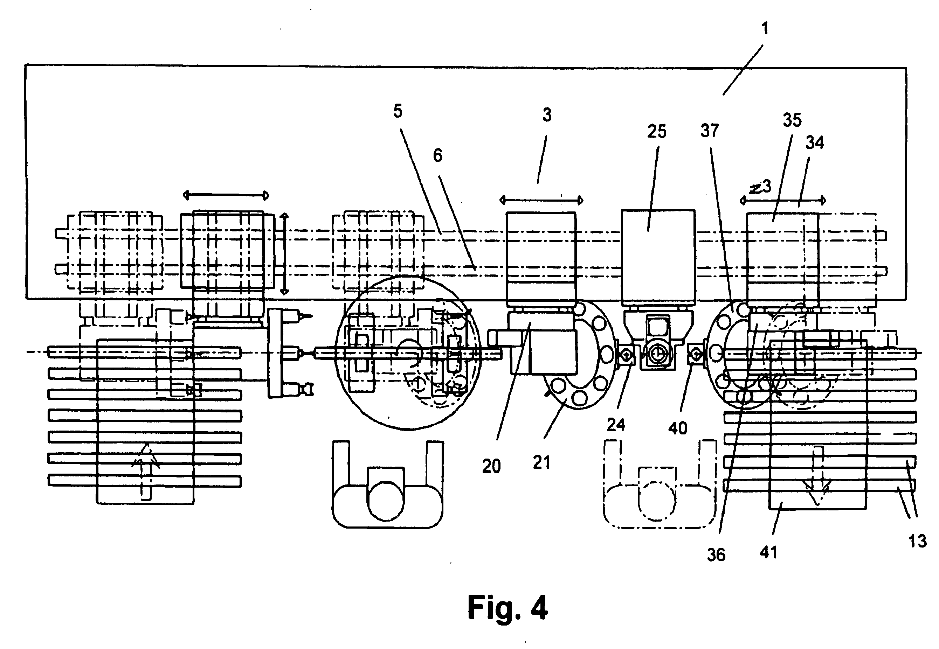

Die Maschine gemäß den Fig. 3 und 4 unterscheidet sich von der vorigen Ausführungsform dadurch, dass sie eine weitere Bearbeitungseinheit 34 aufweist. Sie ist gleich ausgebildet wie die Bearbeitungseinheit 3, jedoch spiegelbildlich zu ihr angeordnet. Zwischen den beiden Bearbeitungseinheiten 3, 34 liegt die Bearbeitungsstation 25. Die Einheit 34 hat den vertikalen Ständer 35, der in Richtung der z3-Achse (Fig. 4) verfahrbar ist. Hierzu können die Schienen 5, 6 auf dem Maschinenbett 1 entsprechend verlängert sein. Es ist aber auch möglich, für die Einheit 34 gesonderte Führungsschienen auf dem Maschinenbett 1 vorzusehen. Längs des Ständers 35 ist in Richtung der y3-Achse (Fig. 3) ein Schlitten 36 verfahrbar, der einen Drehrevolver 37 trägt. Er ist um eine Achse 38 drehbar, die unter 45° zur y3-Achse liegt. Wie sich aus Fig. 3 ergibt, liegen die beiden Drehachsen 22, 38 der beiden Drehrevolver 21, 37 rechtwinklig zueinander. Diese beiden Drehachsen 22, 38 konvergieren in Richtung auf das Maschinenbett 1. Der Drehrevolver 37 ist im Ausführungsbeispiel als Kronenrevolver ausgebildet und weist Werkzeuge 39 auf, mit denen das Werkstück 13 in der Bearbeitungsstation 25 bearbeitet werden kann. Zusätzlich ist der Drehrevolver 37 mit mindestens einem Greifer 40 versehen.

Mit der Maschine erfolgt die Bearbeitung des Werkstückes 13 mit den Einheiten 2 und 3 zunächst in der gleichen Weise, wie anhand der Fig. 1 und 2 beschrieben worden ist. Der zweite Drehrevolver 37 bietet die Möglichkeit, das in der Bearbeitungsstation 25 befindliche Werkstück 13 von zwei Seiten aus mittels einer Drehoperation zu bearbeiten. Dabei können die Werkzeuge 23, 39 der Drehrevolver 21, 37 auf gleicher Höhe, aber auch in unterschiedlichen Höhen am Werkstück 13 arbeiten. Dadurch kann das Werkstück 13 in wesentlich kürzerer Zeit in der Bearbeitungsstation 25 bearbeitet werden als bei der vorigen Ausführungsform.

Nach der Bearbeitung des Werkstückes 13 in der Bearbeitungsstation 25 kann die Einheit 3 zurück zur Spanneinrichtung 14 fahren und in der beschriebenen Weise mit ihrem Greifer 24 das Werkstück 13 aufnehmen. Zeitparallel wird der Drehrevolver 37 um die schräge Achse 38 so geschwenkt, dass der Greifer 40 das Werkstück 13 in der Bearbeitungsstation 25 fassen kann. Nach Zurückfahren der Spanneinheit 26 und/oder des Reitstockes 27 kann die Einheit 34 zurückfahren und das Werkstück 13 entnehmen. Der Drehrevolver 37 wird um die Achse 38 so gedreht, dass das Werkstück 13 aus der vertikalen in die horizontale Lage gelangt, in der das Werkstück vom Greifer 40 auf einer Transporteinrichtung 41, vorzugsweise ein Transportband, abgelegt wird. Während dieses Ablegevorganges kann die Einheit 3 bereits das nächste Werkstück 13 in die Bearbeitungsstation 25 bringen.

Durch die ergänzende Einheit 34 mit dem zweiten Drehrevolver 37 ist es möglich, die Leistung der Maschine zu erhöhen, da für den Abtransport der fertig bearbeiteten Werkstücke 13 aus der Bearbeitungsstation 25 nicht derselbe Drehrevolver 21 eingesetzt werden muss, der zum Transport der Werkstücke 13 aus der Spanneinrichtung 14 zur Bearbeitungsstation 25 eingesetzt wird. Außerdem wird durch die beiden Drehrevolver 21, 37 die Möglichkeit eröffnet, am drehenden Werkstück 13 in der Bearbeitungsstation 25 gleichzeitig Bearbeitungen vorzunehmen. Außerdem kann aufgrund des Einsatzes des zweiten Drehrevolvers 37 der Abstand zwischen der Bearbeitungsstation 25 und der Spanneinrichtung 14 verkürzt werden, da in diesem Bereich kein Abtransport der Werkstücke 13 stattfindet, wie dies bei der vorigen Ausführungsform mit Hilfe der Transporteinrichtung 30 vorgesehen ist. Die Maschine baut dadurch trotz des Einsatzes der Einheit 34 nicht wesentlich größer als die Maschine gemäß den Fig. 1 und 2.

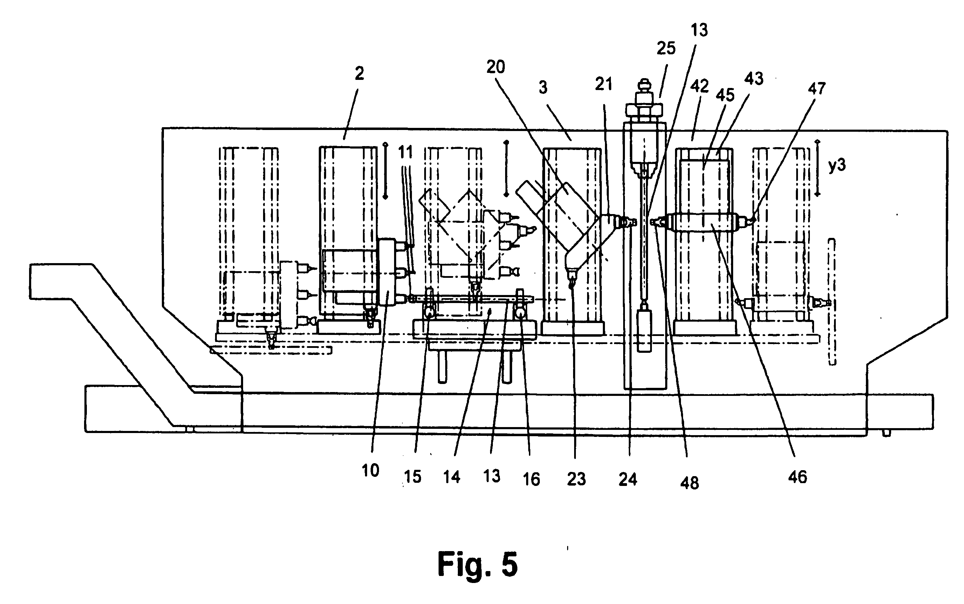

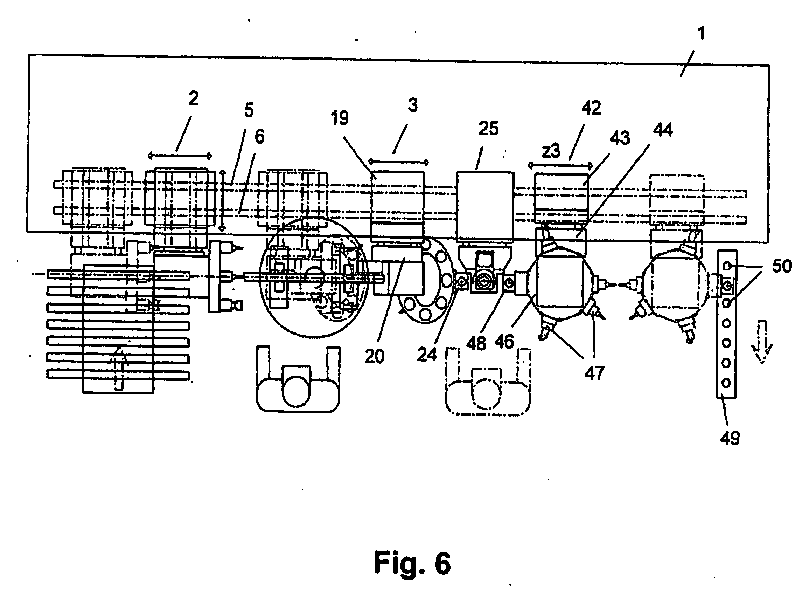

Die Maschine nach den Fig. 5 und 6 unterscheidet sich von der Ausführungsform gemäß den Fig. 1 und 2 dadurch, dass die Bearbeitungseinheit 42 vorgesehen ist, die auf der der Einheit 3 gegenüberliegenden Seite der Bearbeitungsstation 25 angeordnet ist. Die Einheit 42 hat einen vertikalen Ständer 43, der in Richtung der z3-Achse (Fig. 6) auf dem Maschinenbett 1 verfahrbar ist. Für die Einheit 42 können die gleichen Führungsschienen 5, 6 wie für die Einheiten 2, 3 verwendet werden. Es ist aber möglich, für die Einheit 42 gesonderte Führungsschienen vorzusehen. In Höhenrichtung des Ständers 43 (y3-Achse) ist ein Schlitten 44 verfahrbar, der einen um eine vertikale Achse 45 drehbaren Revolver 46 trägt. Er hat Werkzeuge 47 und wenigstens einen Greifer 48.

Der Schlitten 44 befindet sich ebenso wie der Schlitten 20 vor dem Ständer 43 bzw. 19.

Mit den Einheiten 2 und 3 wird das Werkstück, wie anhand der Fig. 1 und 2 erläutert worden ist, in der Spanneinrichtung 14 bearbeitet. Das Werkstück 13 ist in der Spanneinrichtung 14 in horizontaler Lage mittels der Spanneinheiten 15, 16 eingespannt. Mit den Werkzeugen 11 des Revolvers 10 der Einheit 2 werden die Enden des Werkstückes 13 in der beschriebenen Weise bearbeitet. Zusätzlich kann die Einheit 3 bei der Bearbeitung des Werkstückes 13 in der Spanneinrichtung 14 herangezogen werden. Sobald die Bearbeitung des Werkstückes 13 in der Spanneinrichtung 14 abgeschlossen ist, wird es mit Hilfe des Greifers 24 des Drehrevolvers 21 nach Lösen der Spanneinheiten 15, 16 der Spanneinrichtung 14 entnommen und in der beschriebenen Weise in vertikaler Lage in die Bearbeitungsstation 25 transportiert. Dort wird das um seine Achse drehend angetriebene Werkstück 13 durch die entsprechenden Werkzeuge 23 des Drehrevolvers 21 in der beschriebenen Weise einer Drehoperation unterzogen. Der Revolver 46 der Einheit 42 wird um seine Achse 45 so gedreht, dass die entsprechenden Werkzeuge 47 des Revolvers 46 ebenfalls am Werkstück 13 arbeiten können. Die Schlitten 20, 44 der Einheiten 3, 42 sind wiederum im Bereich vor den Ständern 19, 43 angeordnet (Fig. 6). Da die beiden Schlitten 20, 44 unabhängig voneinander in y-Richtung verfahrbar sind und die Drehrevolver 21, 46 unabhängig voneinander betätigt werden können, können am Werkstück 13 von einander gegenüberliegenden Seiten aus Bearbeitungen vorgenommen werden. Wie bei der vorigen Ausführungsform können die Werkzeuge der Drehrevolver 21, 46 in gleicher oder unterschiedlicher Höhe am Werkstück 13 arbeiten.

Da die Drehachse 45 des Drehrevolvers 46 vertikal liegt, wird das Werkstück 13, wenn es mit dem Greifer 48 des Drehrevolvers 46 der Bearbeitungsstation 25 entnommen ist, nicht in eine horizontale Lage geschwenkt, sondern verbleibt in der vertikalen Lage. Der Drehrevolver 46 wird beispielsweise um 180° gedreht, um das in der Bearbeitungsstation 25 fertig bearbeitete Werkstück 13 in eine Transporteinrichtung 49 zu stecken, die mit entsprechenden Stecköffnungen 50 für die Werkstücke 13 versehen ist. Damit die Werkstücke 13 in der Transporteinrichtung 49 abgelegt werden können, wird der Ständer 43 zunächst in z3-Richtung zurückgefahren (strichpunktierte Linien in den Fig. 5 und 6). Dann wird der Schlitten 44 in y3-Richtung so weit nach unten gefahren, bis das untere Ende des Werkstückes 13 in die entsprechende Stecköffnung 50 der Transporteinrichtung 49 gesteckt werden kann. Die Ablage der fertig bearbeiteten Werkstücke 13 erfolgt somit wie bei der vorigen Ausführungsform zeitparallel zum Abholen und Einlegen des nächsten Werkstückes 13 in die Bearbeitungsstation 25. Im Übrigen arbeitet die Maschine gleich wie die vorige Ausführungsform.

Bei den beschriebenen Ausführungsbeispielen wird die Endenbearbeitung in der Spanneinrichtung 14 im Wesentlichen gleichzeitig mit der Drehbearbeitung in der Bearbeitungsstation 25 durchgeführt. Die Taktzeiten können dadurch gering gehalten werden.

Mit dem Drehrevolver 21 der Einheit 3 kann mit den entsprechenden Werkzeugen 23 auch eine Endenbearbeitung des Werkstückes 13 vorgenommen werden, wenn es in der Spanneinrichtung 14 eingespannt ist. Dann ist es in vorteilhafter Weise möglich, mit den Werkzeugen 11 des Revolvers 10 und den Werkzeugen 23 des Drehrevolvers 21 gleichzeitig an beiden Enden des Werkstückes 13 zu arbeiten. Dann ist ein Drehen des Werkstückes 13 in der Spanneinrichtung mit Hilfe des Drehtisches 17 nicht erforderlich. Dadurch können die Hauptzeiten weiter erheblich verringert werden. Der Drehrevolver 21 kann darüber hinaus, wie anhand der Ausführungsbeispiele beschrieben worden ist, auch dazu herangezogen werden, am Werkstück 13 im Bereich zwischen den Spanneinheiten 15, 16 Bearbeitungen vorzunehmen, beispielsweise Bohrungen in das Werkstück 13 einzubringen.

Da die Spanneinrichtung 14 den Drehtisch 17 aufweist, ist es auch möglich, das Werkstück 13 in eine solche Lage zu bringen, dass Schrägbohrungen mit entsprechenden Werkzeugen 11 des Revolvers 10 der Einheit 2 oder mit entsprechenden Werkzeugen 23 des Drehrevolvers 21 der Einheit 3 eingebracht werden können.

Der Drehrevolver 21 dient nicht nur zur Bearbeitung des Werkstückes 13 in der Spanneinrichtung 14, sondern auch zur Bearbeitung des Werkstückes 13 in der eingespannten vertikalen Lage in der Bearbeitungsstation 25. Darüber hinaus dient der Drehrevolver 21 auch zum Transport des Werkstückes 13 von der Spanneinrichtung 14 zur Bearbeitungsstation 25.

Darüber hinaus wird der Drehrevolver 21 auch dazu herangezogen, das in der Bearbeitungsstation 25 bearbeitete Werkstück 13 zu greifen und nach Lösen der Einspannung auf der Transporteinrichtung 30 abzulegen. Der Drehrevolver 21 erfüllt somit eine Mehrfachfunktion, wodurch der konstruktive Aufbau der Maschine sehr einfach gehalten werden kann. Für die unterschiedlichen Arbeitsgänge sind keine gesonderten Einheiten in der Maschine erforderlich. Dadurch kann auch der Steuerungsaufwand der Maschine gering gehalten werden.

Es besteht auch die Möglichkeit, den Drehrevolver 21 und/oder 37, 46 um eine parallel zur x-Richtung liegende Achse schwenkbar zu gestalten. Dann kann der Drehrevolver 21, 37, 46 für die Bearbeitung des Werkstückes 13 in der Spanneinrichtung 14 beispielsweise so eingestellt werden, dass die Werkzeuge 23 des Drehrevolvers 21 beispielsweise Bohrungen in unterschiedlichen Schräglagen am Werkstück 13 bohren können.

Je nach den Werkzeugen ist es darüber hinaus möglich, an den Werkstücken 13 eine Flächenbearbeitung vorzunehmen, beispielsweise ein Plandrehen oder ein Planfräsen.

Die beschriebenen Ausführungsbeispiele sind jeweils als flexible Zwei-Stationen-Fertigungszellen ausgebildet, mit denen unterschiedlichste Bearbeitungen an den Werkstücken 13 vorgenommen werden können. Die Maschinen bilden jeweils eine kompakte Einheit, innerhalb der die Werkstücke 13 an den unterschiedlichen Stationen bearbeitet werden können. Dabei sind die Transportwege zwischen den verschiedenen Stationen sehr kurz, was zu sehr kurzen Nebenzeiten führt. Durch die gewählte Anordnung der Maschinenelemente hat der Bediener 31 nur kürzeste Wege zur Ausübung seiner Tätigkeit zurückzulegen. Anhand der Fig. 4, 6 lässt sich erkennen, dass der Bediener während seiner Tätigkeit direkten Zugang zu den Bearbeitungsstätten hat, ohne dass Transportbänder umgangen werden müssen.

## Patentansprüche

1. Einrichtung zum Bearbeiten von Werkstücken (13), vorzugsweise von Wellen und Achsen, mit wenigstens einer ersten Bearbeitungseinheit (2), mit der eine Endenbearbeitung am Werkstück (13) vorgenommen wird und die einen um eine Achse (9) drehbaren Revolver (10) aufweist, der auf einem Schlitten (8) gelagert und in Vertikalrichtung (y1) längs eines Ständers (4) verfahrbar ist, mit wenigstens einer zweiten Bearbeitungseinheit (3) zur weiteren Bearbeitung des Werkstückes (13), wobei die beiden Bearbeitungseinheiten (2, 3) Teil einer Fertigungszelle sind und die zweite Bearbeitungseinheit (3) einen Revolver (21) aufweist, der mindestens ein Greifelement (24) aufweist, mit dem das Werkstück (13) nach der Endenbearbeitung zur weiteren Bearbeitung in eine Bearbeitungsstation (25) transportierbar ist, **dadurch gekennzeichnet, dass** der Revolver (10) der ersten Bearbeitungseinheit (2) um eine horizontale Achse (9) drehbar ist, dass der Revolver (21) der zweiten Bearbeitungseinheit (3) um eine 45°-Achse (22) drehbar ist, und dass der Schlitten (8) des Revolvers (10) der ersten Bearbeitungseinheit (2) wenigstens ein Greifelement (12) für das Werkstück (13) aufweist.

2. Einrichtung nach Anspruch 1,
**dadurch gekennzeichnet, dass** die erste Bearbeitungseinheit (2) eine zwei- oder dreiachsige Einheit ist.

3. Einrichtung nach Anspruch 1 oder 2,
**dadurch gekennzeichnet, dass** die zweite Bearbeitungseinheit (3) eine zweiachsige Einheit ist.

4. Einrichtung nach einem der Ansprüche 1 bis 3,
**dadurch gekennzeichnet, dass** der Schlitten (8) der ersten Bearbeitungseinheit (2) in z1-Richtung oder in z1- und x1-Richtung verfahrbar ist.

5. Einrichtung nach einem der Ansprüche 1 bis 4,
**dadurch gekennzeichnet, dass** im Bereich zwischen den beiden Bearbeitungseinheiten (2, 3) eine Spanneinrichtung (14) für das Werkstück (13) vorgesehen ist, die vorzugsweise einen Drehtisch (17) aufweist, der um eine vertikale Achse (B1-Achse) drehbar ist.

6. Einrichtung nach einem der Ansprüche 1 bis 5,
**dadurch gekennzeichnet, dass** der Revolver (21) der zweiten Bearbeitungseinheit (3) an einem Schlitten (20) gelagert ist, der in y2-Richtung längs eines Ständers-(19) verfahrbar ist.

7. Einrichtung nach Anspruch 6,
**dadurch gekennzeichnet, dass** der Ständer (19) in z2-Richtung und bis in den Bereich der Spanneinrichtung (14) verfahrbar ist.

8. Einrichtung nach einem der Ansprüche 1 bis 7,
**dadurch gekennzeichnet, dass** das Werkstück (13) bei der Übergabe von der zweiten Bearbeitungseinheit (3) an die Bearbeitungsstation (25) aus einer horizontalen in eine vertikale Lage schwenkbar ist.

9. Einrichtung nach einem der Ansprüche 1 bis 8,
**dadurch gekennzeichnet, dass** Werkzeuge (23) des Revolvers (21) der zweiten Bearbeitungseinheit (3) das Werkstück (13) in der Bearbeitungsstation (25) bearbeiten können.

10. Einrichtung nach einem der Ansprüche 1 bis 9,
**dadurch gekennzeichnet, dass** das Werkstück (13) in der Bearbeitungsstation (25) um seine Achse (B2-Achse) drehbar angetrieben ist.

11. Einrichtung nach einem der Ansprüche 1 bis 10,
**dadurch gekennzeichnet, dass** das Werkstück (13) nach der Bearbeitung in der Bearbeitungsstation (25) mit dem Greifelement (24) des Revolvers (21) der zweiten Bearbeitungseinheit (3) erfasst werden kann und zur Ablage in eine horizontale Lage geschwenkt werden kann.

12. Einrichtung nach einem der Ansprüche 1 bis 11,
**dadurch gekennzeichnet, dass** der Bearbeitungsstation (25) wenigstens eine dritte Bearbeitungseinheit (34, 42) nachgeschaltet ist, die einen Revolver (37, 46) aufweist, der Werkzeuge (39, 47) und wenigstens ein Greifelement (40, 48) aufweist.

13. Einrichtung nach Anspruch 12,
**dadurch gekennzeichnet, dass** der Revolver (37, 46) der dritten Bearbeitungseinheit (34, 42) an einem Schlitten (36, 44) gelagert ist, der längs eines Ständers (35, 43) in y3-Richtung verfahrbar ist.

14. Einrichtung nach Anspruch 13,
**dadurch gekennzeichnet, dass** der Ständer (35, 43) der dritten Bearbeitungseinheit (34, 42) in z3-Richtung verfahrbar ist.

15. Einrichtung nach einem der Ansprüche 12 bis 14,
**dadurch gekennzeichnet, dass** der Revolver (37) um eine 45°-Achse (38) drehbar ist.

16. Einrichtung nach einem der Ansprüche 12 bis 14,
**dadurch gekennzeichnet, dass** der Revolver (46) um eine vertikale Achse (45) drehbar ist.

## Claims

1. Apparatus for machining workpieces (13), preferably shafts and axles, with at least one first machining unit (2), with which machining of the ends of the workpiece (13) is performed and which has a turret (10) which is rotatable about an axis (9) and which is mounted on a carriage (8) and is movable in vertical direction (y1) along a column (4), with at least one second machining unit (3) for further machining the workpiece (13), the two machining units (2, 3) forming part of a finishing set and the second machining unit (3) having a turret (21) which has at least one gripping element (24) by means of which the workpiece (13) can be transported into a machining station (25) for further machining after machining of the ends, **characterized in that** the turret (10) of the first machining unit (2) is rotatable about a horizontal axis (9), that the turret (21) of the second machining unit (3) is rotatable about a 45° axis (22) and that the carriage (8) of the turret (10) of the first machining unit (2) has at least one gripping element (12) for the workpiece (13).

2. Apparatus according to Claim 1, **characterized in that** the first machining unit (2) is a two-axis or three-axis unit.

3. Apparatus according to Claim 1 or 2, **characterized in that** the second machining unit (3) is a two-axis unit.

4. Apparatus according to one of Claims 1 to 3, **characterized in that** the carriage (8) of the first machining unit (2) is movable in direction z1 or in direction z1 and x1.

5. Apparatus according to one of Claims 1 to 4, **characterized in that** a clamping device (14) for the workpiece (13) is provided in the region between the two machining units (2, 3), said clamping device having preferably a revolving table (17) which is rotatable about a vertical axis (axis B1).

6. Apparatus according to one of Claims 1 to 5, **characterized in that** the turret (21) of the second machining unit (3) is mounted on a carriage (20) which is movable in direction y2 along a column (19).

7. Apparatus according to Claim 6, **characterized in that** the column (19) is movable in direction z2 and into the vicinity of the clamping device (14).

8. Apparatus according to one of Claims 1 to 7, **characterized in that** the workpiece (13) is pivotable from a horizontal position into a vertical position during transfer from the second machining unit (3) to the machining station (25).

9. Apparatus according to one of Claims 1 to 8, **characterized in that** the tools (23) of the turret (21) of the second machining unit (3) are able to machine the workpiece (13) in the machining station (25).

10. Apparatus according to one of Claims 1 to 9, **characterized in that** the workpiece (13) is rotatably driven in the machining station (25) about its axis (axis B2).

11. Apparatus according to one of Claims 1 to 10, **characterized in that** the workpiece (13), after machining in the machining station (25), can be gripped with the gripping element (24) of the turret (21) of the second machining unit (3) and can be pivoted into a horizontal position for deposition.

12. Apparatus according to one of Claims 1 to 11, **characterized in that** at least one third machining unit (34, 42) is arranged downstream of the machining station (25) and has a turret (37, 46) which has tools (39, 47) and at least one gripping element (40, 48).

13. Apparatus according to Claim 12, **characterized in that** the turret (37, 46) of the third machining unit (34, 42) is mounted on a carriage (36, 44) which is movable along a column (35, 43) in direction y3.

14. Apparatus according to Claim 13, **characterized in that** the column (35, 43) of the third machining unit (34, 42) is movable in direction z3.

15. Apparatus according to one of Claims 12 to 14, **characterized in that** the turret (37) is rotatable about a 45° axis (38).

16. Apparatus according to one of Claims 12 to 14, **characterized in that** the turret (46) is rotatable about a vertical axis (45).

## Revendications

1. Installation pour l'usinage de pièces d'oeuvre (13), de préférence d'arbres et d'axes, comprenant au moins une première unité d'usinage (2) à l'aide de laquelle est effectué un usinage des extrémités sur la pièce d'oeuvre (13) et présentant une tourelle revolver (10) pouvant tourner autour d'un axe (9), qui est montée sur un chariot (8) et peut être déplacée dans la direction verticale (y1) le long d'un montant (4), l'installation comprenant en outre au moins une deuxième unité d'usinage (3) pour un usinage supplémentaire de la pièce d'oeuvre (13), les deux unités d'usinage (2, 3) faisant partie d'une cellule de fabrication, et la deuxième unité d'usinage (3) présentant une tourelle revolver (21) qui comporte au moins un élément de préhension (24) à l'aide duquel la pièce d'oeuvre (13) peut être transportée, après l'usinage des extrémités, dans un poste d'usinage (25) pour la poursuite de l'usinage, **caractérisée en ce que** la tourelle revolver (10) de la première unité d'usinage (2) peut tourner autour d'un axe horizontal (9), **en ce que** la tourelle revolver (21) de la deuxième unité d'usinage (3) peut tourner autour d'un axe (22) à 45°, et **en ce que** le chariot (8) de la tourelle revolver (10) de la première unité d'usinage (2) présente au moins un élément de préhension (12) pour la pièce d'oeuvre (13).

2. Installation selon la revendication 1, **caractérisée en ce que** la première unité d'usinage (2) est une unité à deux ou trois axes.

3. Installation selon la revendication 1 ou la revendication 2, **caractérisée en ce que** la deuxième unité d'usinage (3) est une unité à deux axes.

4. Installation selon l'une des revendications 1 à 3, **caractérisée en ce que** le chariot (8) de la première unité d'usinage (2) peut être déplacé dans la direction z1 ou dans les directions z1 et x1.

5. Installation selon l'une des revendications 1 à 4, **caractérisée en ce que** dans la zone entre les deux unités d'usinage (2, 3), il est prévu un dispositif de serrage (14) pour la pièce d'oeuvre (13), qui de préférence présente une table tournante (17), qui peut tourner autour d'un axe vertical (axe B1).

6. Installation selon l'une des revendications 1 à 5, **caractérisée en ce que** la tourelle revolver (21) de la deuxième unité d'usinage (3) est montée sur un chariot (20), qui peut être déplacé dans la direction y2 le long d'un montant (19).

7. Installation selon la revendication 6, **caractérisée en ce que** le montant (19) peut être déplacé dans la direction z2 et jusque dans la zone du dispositif de serrage (14).

8. Installation selon l'une des revendications 1 à 7, **caractérisée en ce que** la pièce d'oeuvre (13), lors du transfert de la deuxième unité d'usinage (3) au poste d'usinage (25), peut être basculée d'une position horizontale à une position verticale.

9. Installation selon l'une des revendications 1 à 8, **caractérisée en ce que** des outils (23) de la tourelle revolver (21) de la deuxième unité d'usinage (3), peuvent usiner la pièce d'oeuvre (13) dans le poste d'usinage (25).

10. Installation selon l'une des revendications 1 à 9, **caractérisée en ce que** la pièce d'oeuvre (13) est entraînée en rotation autour de son axe (axe B2) dans le poste d'usinage (25).

11. Installation selon l'une des revendications 1 à 10, **caractérisée en ce que** la pièce d'oeuvre (13), après l'usinage dans le poste d'usinage (25), peut être saisie avec l'élément de préhension (24) de la tourelle revolver (21) de la deuxième unité d'usinage (3), et peut être basculée dans une position horizontale pour être déposée.

12. Installation selon l'une des revendications 1 à 11, **caractérisée en ce qu'**au poste d'usinage (25) succède au moins une troisième unité d'usinage (34, 42), qui présente une tourelle revolver (37, 46) comportant des outils (39, 47) et au moins un élément de préhension (40, 48).

13. Installation selon la revendication 12, **caractérisée en ce que** la tourelle revolver (37, 46) de la troisième unité d'usinage (34, 42) est montée sur un chariot (36, 44), qui peut être déplacé dans la direction y3 le long d'un montant (35, 43).

14. Installation selon la revendication 13, **caractérisée en ce que** le montant (35, 43) de la troisième unité d'usinage (34, 42) peut être déplacé dans la direction z3.

15. Installation selon l'une des revendications 12 à 14, **caractérisée en ce que** la tourelle revolver (37) peut tourner autour d'un axe (38) à 45°.

16. Installation selon l'une des revendications 12 à 14, **caractérisée en ce que** la tourelle revolver (46) peut tourner autour d'un axe (45) vertical.
